# EUROPEAN PATENT APPLICATION

(11) **EP 4 742 211 A1**
(43) Date of publication of application: **13.05.2026**
(21) Application number: 25214408.4
(22) Date of filing: 07.11.2025
(51) Int. Cl.: G08G 1/01, B60W 40/09, G06Q 30/0207, G06Q 40/08

(54) **DETERMINING PERSONALIZED DRIVER RISK**

(30) Priority: 07.11.2024 US 202418939612
(71) Applicant: Cambridge Mobile Telematics Inc., Cambridge, MA 02142 (US)
(72) Inventor: Steele, Patrick Robert, Cambridge, 02142 (US)
(74) Representative: Mewburn Ellis LLP

(57) **Abstract**

A computer-implemented method for determining personalized driving risk includes collecting, as collected data, location data and driving data associated with a one or more trips associated with a driver. Based on the collected data, one or more risky behaviors of the driver is identified. The collected data is combined with mapping data associated with the location data. Based on the combined data, driver behavior data associated with the driver is determined. Behavioral information associated with the driver and driving suggestion information is provided on a computer display of a mobile computing device.

## Description

### BACKGROUND

Traditional auto insurance is based on high-level statistical data models that differentiate an individual driver from a population of drivers, using data such as age, sex, years driving, and accident history. The introduction of telematics-based insurance has allowed these data models to be refined to measure more specific behaviors, such as an individual driver's frequency of sudden acceleration/deceleration, hard braking, distracted driving, or propensity for speeding. However, such aggregate methods lack contextual data, can ignore driver-specific behavior patterns or extrinsic factors that occur in particular scenarios, and lead to inaccuracies in driver risk assessment.

### SUMMARY

The present disclosure describes determining personalized driver risk.

In an implementation, a computer-implemented method for determining personalized driver risk, comprising: collecting, as collected data, location data and driving data associated with a one or more trips associated with a driver; identifying, based on the collected data, one or more risky behaviors of the driver; combining, as combined data, the collected data with mapping data associated with the location data; determining, based on the combined data, driver behavior data associated with the driver; and providing behavioral information associated with the driver and driving suggestion information on a computer display of a mobile computing device..

The described subject matter can be implemented using a computer-implemented method; a non-transitory, computer-readable medium storing computer-readable instructions to perform the computer-implemented method; and a computer-implemented system comprising one or more computer memory devices interoperably coupled with one or more computers and having tangible, non-transitory, machine-readable media storing instructions that, when executed by the one or more computers, perform the computer-implemented method/the computer-readable instructions stored on the non-transitory, computer-readable medium.

The subject matter described in this specification can be implemented to realize one or more of the following advantages. First, the described approach provides contextual data, specific behavior patterns, and extrinsic factors that occur in particular scenarios with respect to determined driver behaviors of a driver. Second, the more accurate/improved data enhances customer satisfaction and a determination of driver risk. Third, the described approach can distinguish between location-, behavioral-, and road-pattern-based risk. Fourth, behavior modification feedback messages can also be transmitted to a driver to assist the driver in avoiding risky behavior.

The details of one or more implementations of the subject matter of this specification are set forth in the Detailed Description, the Claims, and the accompanying drawings. Other features, aspects, and advantages of the subject matter will become apparent to those of ordinary skill in the art from the Detailed Description, the Claims, and the accompanying drawings.

### DESCRIPTION OF DRAWINGS

FIG. 1 illustrates a computer-implemented system for determining personalized driver risk, according to an implementation of the present disclosure.
FIG. 2 is a flowchart illustrating an example of a computer-implemented method for determining personalized driver risk, according to an implementation of the present disclosure.
FIG. 3 is a block diagram illustrating an example of a computer-implemented system used to provide computational functionalities associated with described algorithms, methods, functions, processes, flows, and procedures, according to an implementation of the present disclosure.

Like reference numbers and designations in the various drawings indicate like elements.

### DETAILED DESCRIPTION

The following detailed description describes determining personalized driver risk and is presented to enable any person skilled in the art to make and use the disclosed subject matter in the context of one or more particular implementations. Various modifications, alterations, and permutations of the disclosed implementations can be made and will be readily apparent to those of ordinary skill in the art, and the general principles defined can be applied to other implementations and applications, without departing from the scope of the present disclosure. In some instances, one or more technical details that are unnecessary to obtain an understanding of the described subject matter and that are within the skill of one of ordinary skill in the art may be omitted so as to not obscure one or more described implementations. The present disclosure is not intended to be limited to the described or illustrated implementations, but to be accorded the widest scope consistent with the described principles and features.

Traditional auto insurance is based on high-level statistical data models that differentiate an individual driver from a population of drivers, using data such as age, sex, years driving, and accident history. The introduction of telematics-based insurance has allowed these data models to be refined to measure more specific behaviors, such as an individual driver's frequency of sudden acceleration/deceleration, hard braking, distracted driving, or propensity for speeding. Telematics (e.g., using mobile computing device (e.g., a cell phone), Internet of Things (IoT), vehicle, or other sensor devices as data sources) can provide data for analysis. However, such aggregate methods occur in isolation, lack contextual data, can ignore driver-specific behavior patterns or extrinsic factors that occur in particular scenarios, and can lead to inaccuracies in driver risk assessment. Inaccurate risk assessment can lead to driver penalization (e.g., financially) and dissatisfaction with risk assessment methods.

As previously mentioned, measuring high-level statistics about driving behavior can miss particular behaviors by drivers that could be indicative of risk. Risk can be location-based, behavioral based, and road-pattern-based.

As an example of location-based risk, consider attempting to differentiate risk between two different drivers, each of whom have a same rate of hard braking per mile driven. The driver A has hard braking events distributed evenly over their trips, while driver B has hard braking events exclusively on highways. In this case, it is important to differentiate between these two drivers, both when assessing insurance rates and when providing personalized feedback to improve their driving habits. For example, driver A's driving behavior may be indicative of routinely traveling at high speed (speeding), while driver B's driving behavior may be indicative of other drivers on a fast moving highways forcing sudden/hard braking rather than driver B traveling faster than appropriate for the highway conditions. Location-based risk may also include weather conditions particular to a geographic location (e.g., snow or ice).

Drivers might exhibit a low rate of risky behavior overall, but perform risky maneuvers on certain roads. For example, drivers eager to get home might regularly roll through familiar stop signs or speed up to beat a known long yellow light (familiarity). Alternatively, habitually congested traffic lights might condition a driver to pick up their phone while waiting for a green light (distraction hangover). In these situations, it would be useful to identify locations that are risky to certain drivers and provide feedback to those drivers to decrease the rate at which they engage in location-based risky behaviors.

In some implementations, other location-based risk patterns could include: 1) driving to familiar locations; 2) driving to unfamiliar locations; 3) driving to busy establishments; and 4) driving to and from home or work.

Behavioral risk is similar to location-based risk, but focused instead on particular patterns of behavior. For example, a driver might not often use their cell phone on any particular highway, but regularly take calls on longer drives. Other behavior-based risk patterns could include: 1) driving at certain times of day (e.g., driving to or from work or driving in the mornings or the evenings); 2) driving on shorter or longer trips; 3) driving in rural or urban areas; 4) driving on congested or empty roads; 5) driving at times they usually don't drive at; 6) driving for special events (e.g., holidays or concerts); and 6) driving alone or with passengers. Feedback can be provided to drivers to decrease the rate at which they engage behavioral risk risky behaviors.

There is a continuum between location-based and behavioral-based risk. For example, if a driver brakes aggressively, hesitates, or makes mistakes when entering a local rotary/roundabout road structure, it is possible to extrapolate their behavior elsewhere. This can be referred to road-pattern risk. Meaning that considerations can be made for risk related to a particular road with a particular feature, another road with the particular feature; and roads without the particular feature. Here, feedback can be provided to drivers to decrease the rate at which they engage in road-pattern-based risk risky behaviors. Road-pattern-risk may also include road structure, materials, or configuration due to weather conditions particular to a geographic location (e.g., no reflectors due to seasonal need to remove snow or ice with snowplows).

Described is an approach to permit understanding and identification of individual driver behaviors with respect to at least location-based, behavioral-based, and road-pattern-based risk. The approach permits a more accurate/improved assessment of driver risk of a driver for insurance purposes (e.g., reducing insurance costs) and safety purposes (e.g., reducing accidents/injuries, reducing property damage, and reducing risk to other drivers). The approach can be used to provide suggestions and information to a driver to improve their individual safety habits/driving.

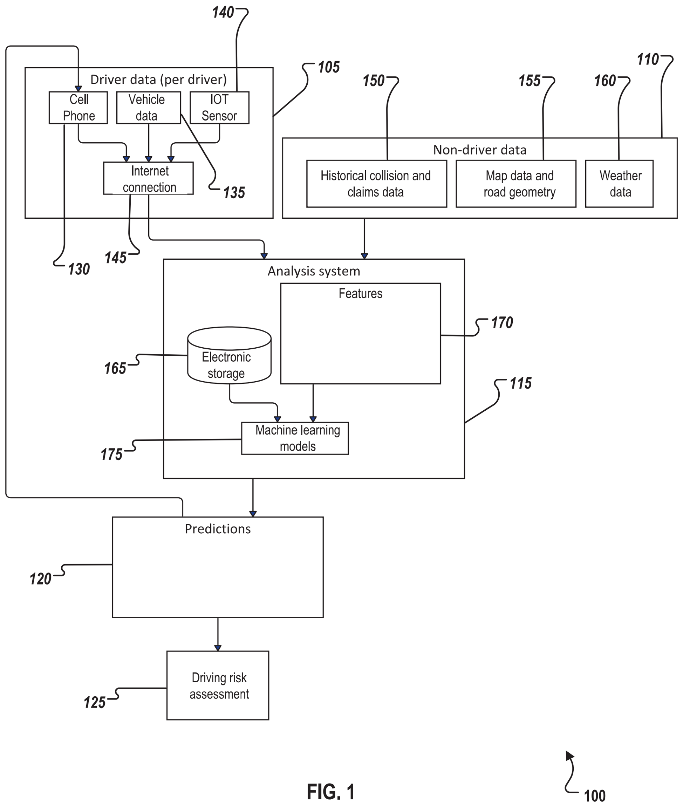

Turning to FIG. 1, FIG. 1 illustrates a computer-implemented system 100 for determining personalized driver risk, according to an implementation of the present disclosure. At a high-level, system 100 includes driver data 105 (per driver), driver data 110, an analysis system 115, outputs 120, and a driving risk assessment 125.

As illustrated, driver data 105 can include cell phone data 130, vehicle data 135, and IoT sensor(s) 140. The driver data 105 (e.g., 3-axis accelerometer data, 3-axis magnetometer data, global positioning system (GPS) data, 3-axis gyroscope data, screen state data, and phone use data (whether by handset, Bluetooth, etc.)) can be transmitted to the analysis system 115 using an Internet (or other network - such as, cellular or Wi-Fi) connection 145. Driver data 105 is collected from driver trips.

Non-driver data 110 can include historical collision and claims data 150, map data and road geometry 155, and weather data 160. In some implementations, the non-driver data 110 can be obtained from third-party or government sources.

The analysis system 115 includes electronic storage 165, features 170, and machine learning (ML) models 175 (e.g., neural networks, pattern matchers, or other ML models). In some implementations, electronic storage 165 can include databases, cloud storage, and/or files/other data structures accessible by the analysis system 115. Features 170 can include rules/processing logic for determining/deriving various aspects of combinations of driver data 105 and non-driver data 110. Features 170 are inputs to the ML models, whether computed or raw, and is either data directly collected or other inputs synthesized from input data. For example, whether a driver is driving at unusual times, driving on unusual routes, minimum speed at a stop sign, etc. As another example, un-transformed 3-axis accelerometer data can be fed into the ML model. As still another example, data can first be oriented with respect to an automobile and harsh acceleration or braking events identified, with the higher-level acceleration and braking events fed into the ML model.

To contextualize an individual driver's behavior, behavior of the driving population at large can be analyzed. This allows the analysis system 115 to explain to the driver which behaviors are unique to them (such as, "you travel faster on this road than most drivers," versus those that are endemic, such as "you brake aggressively on this highway, like many other drivers"). Both classes of behavior might be risky from an insurance perspective, but require different approaches when attempting to modify behavior. Activities unique to a particular driver can be coached to be avoided (such as, "remember to slow down on this road,") compared with more general advice (such as, "many drivers brake aggressively on this road, so make sure to leave enough space in front of your vehicle").

A driver might vary their behavior on certain types of roads, or on particular roads. For example, one driver might habitually speed on highways, while another may only speed on highways on their daily commute. The analysis system 115 can incorporates map data and road geometry 155 to categorize behavior by abstract features of a trip and specific roads traveled. In the first case the analysis system 115 can classify behaviors based on road geometry (such as, whether the road is a highway or whether the behavior occurs at an intersection). In the second case, the analysis system 115 can classify behavior based on the specific roads involved. This allows the analysis system 115 to distinguish between general driver habits (such as, using a cell phone while driving in traffic) and specific driving habits (such as, using a cell phone only on a morning commute).

ML models 175 are trained to predict whether particular behaviors from a driver are risky, as well as to identify patterns of risky behavior. In some implementations, the inputs to the ML models 175 are features 170. In some implementations, the ML models 175 can be trained against historical collision and insurance claims data 150, or any other dataset containing risky driving behavior.

At a high-level, inputs to the ML models 175 are behaviors (such as, sudden/hard braking, speeding, rolling through a stop sign, and phone use while driving). Additional features can include summaries of a user's typical routes and locations (e.g., by annotating each event with a marker indicating that it took place on a daily commute). Behaviors can be enriched by classifying behaviors, for example, by time-of-day and road geometry, as well as by including data from the driving population as a whole.

Resulting features can include, for example, "number of hard brakes per mile on a highway by the driver," "average number of hard brakes per mile on a highway by the entire population," or "phone use while on a regular commute." By including features related to both an individual driver and those of the driving population as a whole, the ML models 175 are capable of inferring latent features comparing a driver's individual behavior with those of the general driving population. The ML models 175 are used both to produce aggregate risk predictions for a driver, as well as for identifying particular patterns of risky behavior by the driver.

Driver data 105 can be combined with non-driver data 110 (e.g., map data) to identify traffic infractions (such as failing to stop at a stop sign or making illegal U-turns), as well as to identify the types of roads traveled during each risky behavior.

Outputs 120 can include data particular to a driver. For example, phone distraction is present on familiar roads, the driver speeds on long-distance trips, and the driver rolls through stop signs on the way to work. Behavior modification feedback messages can also be transmitted through the analysis system 115 and to the driver to assist the driver in avoiding risky behavior. This feedback system can be used to coach drivers to assist with mitigating determined general bad habits (such as, using a cell phone while driving) and location-specific risks (such as, rolling through a particular stop sign on their way to work). The feedback messages can be transmitted to the driver's personal cell phone or computer to offer them insight on their driving behavior and to offer them suggestions for how to drive more safely (for example, and as described above, the analysis system 115 can use the display of the driver's cell phone to display a message explaining to the driver which behaviors are unique to them (such as, "you travel faster on this road than most drivers," versus those that are endemic, such as "you brake aggressively on this highway, like many other drivers").

The outputs 120 can also be used to generate a risk rating for drivers that improves on existing rating methodologies. For example, the analysis system 115 can measure features deemed relevant. Comparing a driver's individual behavior to that of the broader driving population allows the analysis system 115 to contextualize that behavior. For example, hard braking is risky in general, but is necessary to avoid collisions. By comparing the individual drivers' behavior relative to the broader driving population, hard-braking can be categorized as either the result of aggressive driving (e.g., when the driver habitually hard-brakes across all road types or hard-brakes where most drivers do not) or as defensive driving (e.g., when the driver only hard-brakes on roads where most other drivers also hard brake.) This allows the same observed behavior, such as hard braking, to be viewed as either a negative or positive behavior based on context.

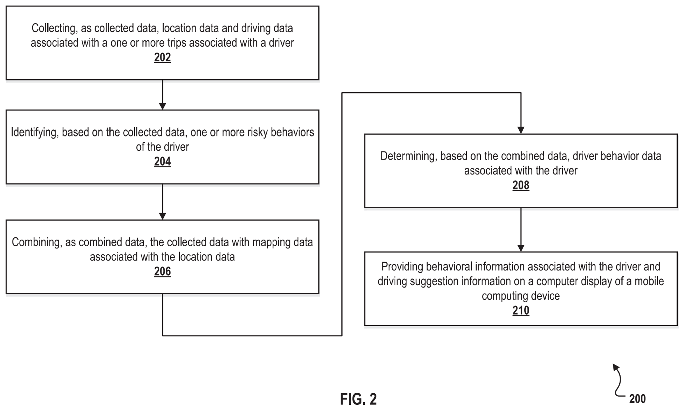

FIG. 2 is a flowchart illustrating an example of a computer-implemented method 200 for determining personalized driver risk, according to an implementation of the present disclosure. For clarity of presentation, the description that follows generally describes method 200 in the context of the other figures in this description. However, it will be understood that method 200 can be performed, for example, by any system, environment, software, and hardware, or a combination of systems, environments, software, and hardware, as appropriate. In some implementations, various steps of method 200 can be run in parallel, in combination, in loops, or in any order.

At 202, location data and driving data associated with a one or more trips associated with a driver are collected. In some implementations, the collected data includes measurements from vehicle-based sensors, a mobile computing device, or Internet-of- Things (IoT) sensors. From 202, method 200 proceeds to 204.

At 204, based on the collected data, one or more risky behaviors of the driver is identified. In some implementations, based on the combined data and for each risky behavior of the one or more risky behaviors, a traffic infraction associated with each risky behavior of the one or more risky behaviors is identified. In some implementations, based on the combined data and for each risky behavior of the one or more risky behaviors, a type of road associated with each risky behavior of the one or more risky behaviors is identified. In some implementations, the one or more risky behaviors include a mobile-computing-device-based distraction, sudden braking, sudden acceleration, sudden deacceleration, or traveling at a high speed. In some implementations, traffic infractions include failing to stop at a stop sign, failing to observe traffic signals, failing to observe traffic signs, speeding through reduced speed zones, performing illegal U-turns, improper parking or stopping, or driving a wrong direction on a road. In some implementations, machine-learning (ML) models are trained to predict, based on the collected data, whether a particular behavior of the driver is risky and to identify patterns of risky behavior for the driver, wherein the ML models are training using a dataset containing data indicating risky driving behavior. From 204, method 200 proceeds to 206.

At 206, the collected data is combined with mapping data associated with the location data. From 206, method 200 proceeds to 208.

At 208, based on the combined data, driver behavior data associated with the driver is determined. From 208, method 200 proceeds to 210.

At 210, behavioral information associated with the driver and driving suggestion information is provided on a computer display of a mobile computing device. In some implementations, based on the location data and to generate other driver behavior data, driver behavior associated with one or more other drivers is analyzed. Based on the other driver behavior data and the driver behavior data, generating an individual risk rating for the driver, or generating, based on the other driver behavior data and the driver behavior data, the behavioral information associated with the driver and driving suggestion information. In some implementations, the driver behavior data associated with the driver and the other driver behavior data is based on road geometry and specific roads traveled. After 210, method 200 can stop.

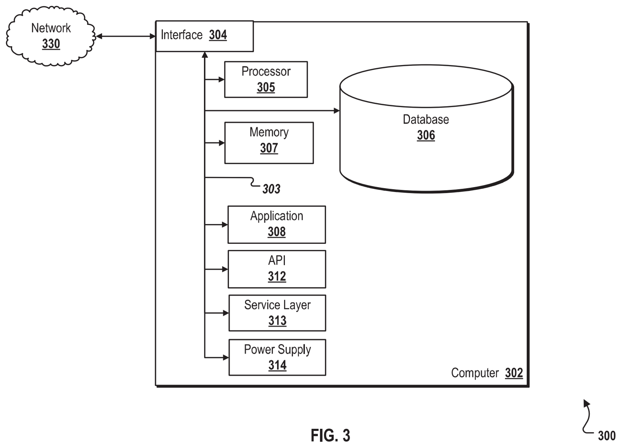

FIG. 3 is a block diagram illustrating an example of a computer-implemented System 300 used to provide computational functionalities associated with described algorithms, methods, functions, processes, flows, and procedures, according to an implementation of the present disclosure. In the illustrated implementation, System 300 includes a Computer 302 and a Network 330.

The illustrated Computer 302 is intended to encompass any computing device, such as a server, desktop computer, laptop/notebook computer, wireless data port, smart phone, personal data assistant (PDA), tablet computer, one or more processors within these devices, or a combination of computing devices, including physical or virtual instances of the computing device, or a combination of physical or virtual instances of the computing device. Additionally, the Computer 302 can include an input device, such as a keypad, keyboard, or touch screen, or a combination of input devices that can accept user information, and an output device that conveys information associated with the operation of the Computer 302, including digital data, visual, audio, another type of information, or a combination of types of information, on a graphical-type user interface (UI) (or GUI) or other UI.

The Computer 302 can serve in a role in a distributed computing system as, for example, a client, network component, a server, or a database or another persistency, or a combination of roles for performing the subject matter described in the present disclosure. The illustrated Computer 302 is communicably coupled with a Network 330. In some implementations, one or more components of the Computer 302 can be configured to operate within an environment, or a combination of environments, including cloud-computing, local, or global.

At a high level, the Computer 302 is an electronic computing device operable to receive, transmit, process, store, or manage data and information associated with the described subject matter. According to some implementations, the Computer 302 can also include or be communicably coupled with a server, such as an application server, e-mail server, web server, caching server, or streaming data server, or a combination of servers.

The Computer 302 can receive requests over Network 330 (for example, from a client software application executing on another Computer 302) and respond to the received requests by processing the received requests using a software application or a combination of software applications. In addition, requests can also be sent to the Computer 302 from internal users (for example, from a command console or by another internal access method), external or third-parties, or other entities, individuals, systems, or computers.

Each of the components of the Computer 302 can communicate using a System Bus 303. In some implementations, any, or all of the components of the Computer 302, including hardware, software, or a combination of hardware and software, can interface over the System Bus 303 using an application programming interface (API) 312, a Service Layer 313, or a combination of the API 312 and Service Layer 313. The API 312 can include specifications for routines, data structures, and object classes. The API 312 can be either computer-language independent or dependent and refer to a complete interface, a single function, or even a set of APIs. The Service Layer 313 provides software services to the Computer 302 or other components (whether illustrated or not) that are communicably coupled to the Computer 302. The functionality of the Computer 302 can be accessible for all service consumers using the Service Layer 313. Software services, such as those provided by the Service Layer 313, provide reusable, defined functionalities through a defined interface. For example, the interface can be software written in a computing language (for example JAVA or C++) or a combination of computing languages, and providing data in a particular format (for example, extensible markup language (XML)) or a combination of formats. While illustrated as an integrated component of the Computer 302, alternative implementations can illustrate the API 312 or the Service Layer 313 as stand-alone components in relation to other components of the Computer 302 or other components (whether illustrated or not) that are communicably coupled to the Computer 302. Moreover, any or all parts of the API 312 or the Service Layer 313 can be implemented as a child or a sub-module of another software module, enterprise application, or hardware module without departing from the scope of the present disclosure.

The Computer 302 includes an Interface 304. Although illustrated as a single Interface 304, two or more Interfaces 304 can be used according to particular needs, desires, or particular implementations of the Computer 302. The Interface 304 is used by the Computer 302 for communicating with another computing system (whether illustrated or not) that is communicatively linked to the Network 330 in a distributed environment. Generally, the Interface 304 is operable to communicate with the Network 330 and includes logic encoded in software, hardware, or a combination of software and hardware. More specifically, the Interface 304 can include software supporting one or more communication protocols associated with communications such that the Network 330 or hardware of Interface 304 is operable to communicate physical signals within and outside of the illustrated Computer 302.

The Computer 302 includes a Processor 305. Although illustrated as a single Processor 305, two or more Processors 305 can be used according to particular needs, desires, or particular implementations of the Computer 302. Generally, the Processor 305 executes instructions and manipulates data to perform the operations of the Computer 302 and any algorithms, methods, functions, processes, flows, and procedures as described in the present disclosure.

The Computer 302 also includes a Database 306 that can hold data for the Computer 302, another component communicatively linked to the Network 330 (whether illustrated or not), or a combination of the Computer 302 and another component. For example, Database 306 can be an in-memory or conventional database storing data consistent with the present disclosure. In some implementations, Database 306 can be a combination of two or more different database types (for example, a hybrid in-memory and conventional database) according to particular needs, desires, or particular implementations of the Computer 302 and the described functionality. Although illustrated as a single Database 306, two or more databases of similar or differing types can be used according to particular needs, desires, or particular implementations of the Computer 302 and the described functionality. While Database 306 is illustrated as an integral component of the Computer 302, in alternative implementations, Database 306 can be external to the Computer 302. The Database 306 can hold and operate on at least any data type mentioned or any data type consistent with this disclosure.

The Computer 302 also includes a Memory 307 that can hold data for the Computer 302, another component or components communicatively linked to the Network 330 (whether illustrated or not), or a combination of the Computer 302 and another component. Memory 307 can store any data consistent with the present disclosure. In some implementations, Memory 307 can be a combination of two or more different types of memory (for example, a combination of semiconductor and magnetic storage) according to particular needs, desires, or particular implementations of the Computer 302 and the described functionality. Although illustrated as a single Memory 307, two or more Memories 307 or similar or differing types can be used according to particular needs, desires, or particular implementations of the Computer 302 and the described functionality. While Memory 307 is illustrated as an integral component of the Computer 302, in alternative implementations, Memory 307 can be external to the Computer 302.

The Application 308 is an algorithmic software engine providing functionality according to particular needs, desires, or particular implementations of the Computer 302, particularly with respect to functionality described in the present disclosure. For example, Application 308 can serve as one or more components, modules, or applications. Further, although illustrated as a single Application 308, the Application 308 can be implemented as multiple Applications 308 on the Computer 302. In addition, although illustrated as integral to the Computer 302, in alternative implementations, the Application 308 can be external to the Computer 302.

The Computer 302 can also include a Power Supply 314. The Power Supply 314 can include a rechargeable or non-rechargeable battery that can be configured to be either user- or non-user-replaceable. In some implementations, the Power Supply 314 can include power-conversion or management circuits (including recharging, standby, or another power management functionality). In some implementations, the Power Supply 314 can include a power plug to allow the Computer 302 to be plugged into a wall socket or another power source to, for example, power the Computer 302 or recharge a rechargeable battery.

There can be any number of Computers 302 associated with, or external to, a computer system containing Computer 302, each Computer 302 communicating over Network 330. Further, the term "client," "user," or other appropriate terminology can be used interchangeably, as appropriate, without departing from the scope of the present disclosure. Moreover, the present disclosure contemplates that many users can use one Computer 302, or that one user can use multiple computers 302.

Described implementations of the subject matter can include one or more features, alone or in combination.

For example, in a first implementation, a computer-implemented method for determining personalized driver risk, comprising: collecting, as collected data, location data and driving data associated with a one or more trips associated with a driver; identifying, based on the collected data, one or more risky behaviors of the driver; combining, as combined data, the collected data with mapping data associated with the location data; determining, based on the combined data, driver behavior data associated with the driver; and providing behavioral information associated with the driver and driving suggestion information on a computer display of a mobile computing device.

The foregoing and other described implementations can each, optionally, include one or more of the following features:

A first feature, combinable with any of the following features, comprising: identifying, based on the combined data and for each risky behavior of the one or more risky behaviors, a traffic infraction associated with each risky behavior of the one or more risky behaviors.

A second feature, combinable with any of the previous or following features, comprising: identifying, based on the combined data and for each risky behavior of the one or more risky behaviors, a type of road associated with each risky behavior of the one or more risky behaviors.

A third feature, combinable with any of the previous or following features, wherein the collected data includes measurements from vehicle-based sensors, a mobile computing device, or Internet-of-Things (IoT) sensors.

A fourth feature, combinable with any of the previous or following features, wherein the one or more risky behaviors include a mobile-computing-device-based distraction, sudden braking, sudden acceleration, sudden deacceleration, or traveling at a high speed.

A fifth feature, combinable with any of the previous or following features, wherein traffic infractions include failing to stop at a stop sign, failing to observe traffic signals, failing to observe traffic signs, speeding through reduced speed zones, performing illegal U-turns, improper parking or stopping, or driving a wrong direction on a road.

A sixth feature, combinable with any of the previous or following features, comprising: analyzing, based on the location data and to generate other driver behavior data, driver behavior associated with one or more other drivers.

A seventh feature, combinable with any of the previous or following features, comprising: generating, based on the other driver behavior data and the driver behavior data, an individual risk rating for the driver; or generating, based on the other driver behavior data and the driver behavior data, the behavioral information associated with the driver and driving suggestion information.

An eighth feature, combinable with any of the previous or following features, wherein the driver behavior data associated with the driver and the other driver behavior data is based on road geometry and specific roads traveled.

A ninth feature, combinable with any of the previous or following features, comprising: training machine-learning (ML) models to predict, based on the collected data, whether a particular behavior of the driver is risky and to identify patterns of risky behavior for the driver, wherein the ML models are training using a dataset containing data indicating risky driving behavior.

In a second implementation, a non-transitory, computer-readable medium storing one or more instructions executable by a computer system to perform one or more operations, comprising: collecting, as collected data, location data and driving data associated with a one or more trips associated with a driver; identifying, based on the collected data, one or more risky behaviors of the driver; combining, as combined data, the collected data with mapping data associated with the location data; determining, based on the combined data, driver behavior data associated with the driver; and providing behavioral information associated with the driver and driving suggestion information on a computer display of a mobile computing device.

The foregoing and other described implementations can each, optionally, include one or more of the following features:

A first feature, combinable with any of the following features, comprising: identifying, based on the combined data and for each risky behavior of the one or more risky behaviors, a traffic infraction associated with each risky behavior of the one or more risky behaviors.

A second feature, combinable with any of the previous or following features, comprising: identifying, based on the combined data and for each risky behavior of the one or more risky behaviors, a type of road associated with each risky behavior of the one or more risky behaviors.

A third feature, combinable with any of the previous or following features, wherein the collected data includes measurements from vehicle-based sensors, a mobile computing device, or Internet-of-Things (IoT) sensors.

A fourth feature, combinable with any of the previous or following features, wherein the one or more risky behaviors include a mobile-computing-device-based distraction, sudden braking, sudden acceleration, sudden deacceleration, or traveling at a high speed.

A fifth feature, combinable with any of the previous or following features, wherein traffic infractions include failing to stop at a stop sign, failing to observe traffic signals, failing to observe traffic signs, speeding through reduced speed zones, performing illegal U-turns, improper parking or stopping, or driving a wrong direction on a road.

A sixth feature, combinable with any of the previous or following features, comprising: analyzing, based on the location data and to generate other driver behavior data, driver behavior associated with one or more other drivers.

A seventh feature, combinable with any of the previous or following features, comprising: generating, based on the other driver behavior data and the driver behavior data, an individual risk rating for the driver; or generating, based on the other driver behavior data and the driver behavior data, the behavioral information associated with the driver and driving suggestion information.

An eighth feature, combinable with any of the previous or following features, wherein the driver behavior data associated with the driver and the other driver behavior data is based on road geometry and specific roads traveled.

A ninth feature, combinable with any of the previous or following features, comprising: training machine-learning (ML) models to predict, based on the collected data, whether a particular behavior of the driver is risky and to identify patterns of risky behavior for the driver, wherein the ML models are training using a dataset containing data indicating risky driving behavior.

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations, comprising: collecting, as collected data, location data and driving data associated with a one or more trips associated with a driver; identifying, based on the collected data, one or more risky behaviors of the driver; combining, as combined data, the collected data with mapping data associated with the location data; determining, based on the combined data, driver behavior data associated with the driver; and providing behavioral information associated with the driver and driving suggestion information on a computer display of a mobile computing device.

The foregoing and other described implementations can each, optionally, include one or more of the following features:

A first feature, combinable with any of the following features, comprising: identifying, based on the combined data and for each risky behavior of the one or more risky behaviors, a traffic infraction associated with each risky behavior of the one or more risky behaviors.

A second feature, combinable with any of the previous or following features, comprising: identifying, based on the combined data and for each risky behavior of the one or more risky behaviors, a type of road associated with each risky behavior of the one or more risky behaviors.

A third feature, combinable with any of the previous or following features, wherein the collected data includes measurements from vehicle-based sensors, a mobile computing device, or Internet-of-Things (IoT) sensors.

A fourth feature, combinable with any of the previous or following features, wherein the one or more risky behaviors include a mobile-computing-device-based distraction, sudden braking, sudden acceleration, sudden deacceleration, or traveling at a high speed.

A fifth feature, combinable with any of the previous or following features, wherein traffic infractions include failing to stop at a stop sign, failing to observe traffic signals, failing to observe traffic signs, speeding through reduced speed zones, performing illegal U-turns, improper parking or stopping, or driving a wrong direction on a road.

A sixth feature, combinable with any of the previous or following features, comprising: analyzing, based on the location data and to generate other driver behavior data, driver behavior associated with one or more other drivers.

A seventh feature, combinable with any of the previous or following features, comprising: generating, based on the other driver behavior data and the driver behavior data, an individual risk rating for the driver; or generating, based on the other driver behavior data and the driver behavior data, the behavioral information associated with the driver and driving suggestion information.

An eighth feature, combinable with any of the previous or following features, wherein the driver behavior data associated with the driver and the other driver behavior data is based on road geometry and specific roads traveled.

A ninth feature, combinable with any of the previous or following features, comprising: training machine-learning (ML) models to predict, based on the collected data, whether a particular behavior of the driver is risky and to identify patterns of risky behavior for the driver, wherein the ML models are training using a dataset containing data indicating risky driving behavior.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application-specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a GPS receiver, or a portable memory storage device, for example, a universal serial bus (USB) flash drive, to name just a few.

Non-transitory computer-readable media for storing computer program instructions and data can include all forms of permanent/non-permanent or volatile/non-volatile memory, media and memory devices, including by way of example semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto-optical disks; and optical memory devices, for example, digital versatile/video disc (DVD), compact disc (CD)-ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including, but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method for determining personalized driver risk, comprising:
collecting, as collected data, location data and driving data associated with a one or more trips associated with a driver;
identifying, based on the collected data, one or more risky behaviors of the driver;
combining, as combined data, the collected data with mapping data associated with the location data;
determining, based on the combined data, driver behavior data associated with the driver; and
providing behavioral information associated with the driver and driving suggestion information on a computer display of a mobile computing device.

2. The computer-implemented method of claim 1, comprising:
identifying, based on the combined data and for each risky behavior of the one or more risky behaviors, a traffic infraction associated with each risky behavior of the one or more risky behaviors.

3. The computer-implemented method of claim 2, comprising:
identifying, based on the combined data and for each risky behavior of the one or more risky behaviors, a type of road associated with each risky behavior of the one or more risky behaviors.

4. The computer-implemented method of claim 1, wherein the collected data includes measurements from vehicle-based sensors, a mobile computing device, or Internet-of- Things (IoT) sensors.

5. The computer-implemented method of claim 1, wherein the one or more risky behaviors include a mobile-computing-device-based distraction, sudden braking, sudden acceleration, sudden deacceleration, or traveling at a high speed.

6. The computer-implemented method of claim 1, wherein traffic infractions include failing to stop at a stop sign, failing to observe traffic signals, failing to observe traffic signs, speeding through reduced speed zones, performing illegal U-turns, improper parking or stopping, or driving a wrong direction on a road.

7. The computer-implemented method of claim 1, comprising:
analyzing, based on the location data and to generate other driver behavior data, driver behavior associated with one or more other drivers.

8. The computer-implemented method of claim 7, comprising:
generating, based on the other driver behavior data and the driver behavior data, an individual risk rating for the driver; or
generating, based on the other driver behavior data and the driver behavior data, the behavioral information associated with the driver and driving suggestion information.

9. The computer-implemented method of claim 7, wherein the driver behavior data associated with the driver and the other driver behavior data is based on road geometry and specific roads traveled.

10. The computer-implemented method of claim 1, comprising:
training machine-learning (ML) models to predict, based on the collected data, whether a particular behavior of the driver is risky and to identify patterns of risky behavior for the driver, wherein the ML models are training using a dataset containing data indicating risky driving behavior.

11. A non-transitory, computer-readable medium storing one or more instructions executable by a computer system to perform one or more operations, comprising:
collecting, as collected data, location data and driving data associated with a one or more trips associated with a driver;
identifying, based on the collected data, one or more risky behaviors of the driver;
combining, as combined data, the collected data with mapping data associated with the location data;
determining, based on the combined data, driver behavior data associated with the driver; and
providing behavioral information associated with the driver and driving suggestion information on a computer display of a mobile computing device.

12. The non-transitory, computer-readable medium of claim 11, further comprising at least one of:
identifying, based on the combined data and for each risky behavior of the one or more risky behaviors, a type of road associated with each risky behavior of the one or more risky behaviors; or
identifying, based on the combined data and for each risky behavior of the one or more risky behaviors, a traffic infraction associated with each risky behavior of the one or more risky behaviors;
wherein traffic infractions include failing to stop at a stop sign, failing to observe traffic signals, failing to observe traffic signs, speeding through reduced speed zones, performing illegal U-turns, improper parking or stopping, or driving a wrong direction on a road.

13. The non-transitory, computer-readable medium of claim 11, comprising:
analyzing, based on the location data and to generate other driver behavior data, driver behavior associated with one or more other drivers; and
generating, based on the other driver behavior data and the driver behavior data, an individual risk rating for the driver; or
generating, based on the other driver behavior data and the driver behavior data, the behavioral information associated with the driver and driving suggestion information.

14. The non-transitory, computer-readable medium of claim 11, comprising:
training machine-learning (ML) models to predict, based on the collected data, whether a particular behavior of the driver is risky and to identify patterns of risky behavior for the driver, wherein the ML models are training using a dataset containing data indicating risky driving behavior.

15. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations, comprising:
collecting, as collected data, location data and driving data associated with a one or more trips associated with a driver;
identifying, based on the collected data, one or more risky behaviors of the driver;
combining, as combined data, the collected data with mapping data associated with the location data;
determining, based on the combined data, driver behavior data associated with the driver; and
providing behavioral information associated with the driver and driving suggestion information on a computer display of a mobile computing device.
